# EUROPÄISCHE PATENTSCHRIFT

(11) **EP 3 589 762 B1**
(45) Veröffentlichungstag und Bekanntmachung des Hinweises auf die Patenterteilung: **29.07.2020**
(21) Anmeldenummer: 18703303.0
(22) Anmeldetag: 02.02.2018
(51) Int. Cl.: C22B 1/08, C22B 3/04, C22B 3/42, C22B 3/44, C22B 26/12, C25B 1/02, C25B 1/16, C25B 1/26, C01B 7/01, C01D 15/02, C01D 15/04, C25B 1/46

(54) **VERFAHREN ZUR HERSTELLUNG VON LITHIUMHYDROXID AUS LITHIUMHALTIGEM ERZ MITTELS CHLORIERUNG UND CHLORALKALI-PROZESS**
METHOD FOR PRODUCING LITHIUM HYDROXIDE FROM LITHIUM-CONTAINING ORE BY MEANS OF CHLORINATION AND CHLOROALKALI PROCESS
PROCÉDÉ DE PRODUCTION D'HYDROXYDE DE LITHIUM À PARTIR DE MINERAI DE LITHIUM PAR CHLORATION ET PAR UN PROCÉDÉ CHLORE-ALCALI

(30) Priorität: 28.02.2017 DE 102017203264; 28.11.2017 DE 102017221268
(43) Veröffentlichungstag der Anmeldung: 08.01.2020
(73) Patentinhaber: SMS Group GmbH, 40237 Düsseldorf (DE)
(72) Erfinder: BIGLARI, Mostafa, 70173 Stuttgart (DE)
(74) Vertreter: Kross, Ulrich
(86) Internationale Anmeldenummer: PCT/EP2018/052645
(87) Internationale Veröffentlichungsnummer: WO 2018/158035

(56) Entgegenhaltungen:
- US-A- 2 059 750
- US-A1- 2005 220 691
- US-A1- 2015 152 523
- L.I. BARBOSA ET AL: "Lithium extraction from [beta]-spodumene through chlorination with chlorine gas", MINERALS ENGINEERING., Bd. 56, 1. Februar 2014 (2014-02-01), Seiten 29-34, XP055468949, GB ISSN: 0892-6875, DOI: 10.1016/j.mineng.2013.10.026

## Beschreibung

Die Erfindung richtet sich auf ein Verfahren zur Herstellung von Lithiumhydroxid aus lithiumhaltigem Erz und/oder Mineral und/oder aus lithiumhaltigen Erden, insbesondere von hochreinem Lithiumhydroxid zur Verwendung in Batterien und/oder Akkumulatoren.
Bereits seit einigen Jahren lässt sich ein weltweiter Anstieg des Bedarfs an dem Leichtmetall Lithium beobachten. Lithium, bspw. in der Form von Lithiumhydroxid und Lithiumkarbonat, wird aufgrund seiner elektrochemischen Eigenschaften vor allem für Batterieanwendungen, insbesondere für wieder aufladbare Batterien und/oder Akkumulatoren, sogenannte Lithium-Ionen-Batterien, verwendet. Diese finden insbesondere in transportablen elektrischen Geräten, wie Mobiltelefonen, Laptops oder ähnlichem Anwendung. Auch in der Automobilindustrie gewinnt die Lithium-Ionen-Batterie in Elektro- und Hybridfahrzeugen als Alternative oder Ergänzung zum Verbrennungsmotor zunehmend an Bedeutung. Für die Zukunft ist daher mit einem weiteren Anstieg des Bedarfs an Lithiumhydroxid und hochreinem Lithiumkarbonat zu rechnen.

Die Gewinnung von Lithium erfolgt derzeit vorwiegend aus Salzlaugen oder Solen, welche beispielsweise aus Salzseen gewonnen werden, mittels eines Absorptions-, Verdampfungs-, Ausfällungs- und/oder lonenaustauschverfahrens. Für den zukünftig anfallenden Bedarf an Lithium werden diese Quellen jedoch nicht ausreichen. In dem Artikel von MESHRAM et al., Extraction of lithium from primary and secondary sources by pre-treatment, leaching and separation, in: Hydrometallurgy 150 (Oktober 2014) 192-208 sind verschiedene natürliche Lithiumquellen und Verfahren zu dessen Gewinnung offenbart. Demnach ist die Lithiumgewinnung aus Erzen und Mineralen, wie Pegmatit, Spodumen und Petalit bzw. Tonerden, wie Hektorit, zwar aufwendiger als die Gewinnung aus Salzlaugen oder Solen, aber ebenfalls über verschiedene Verfahren, z. B. das Sulfatverfahren oder den Alkaliaufschluss, möglich. Üblicherweise erfolgt die Gewinnung von Lithiumhydroxid aus lithiumhaltigen Erzen mittels Zugabe von Sulfatsalzen oder Schwefelsäure, gefolgt durch einige Reinigungsschritte und über die Herstellung von Lithiumkarbonat als Zwischenprodukt. Die lithiumhaltigen Erze werden zunächst geröstet bzw. kalziniert, wodurch das laugbare Lithiummineral β-Spodumen entsteht. Das β-Spodumen wird anschließend mit Schwefelsäure gelaugt, um eine wässrige Lithiumsulfatlösung zu erhalten. Durch das Hinzufügen von Kalkmilch und Natriumkarbonat werden dann schrittweise Magnesium, Eisen und Calcium aus der Lösung entfernt. Indem weiteres Natriumkarbonat der Lösung hinzugefügt wird, lassen sich bis zu 98 % des in der Lösung enthaltenen Lithiums als Lithiumkarbonat ausfällen. In einem weiteren Prozessschritt wird das erhaltene Lithiumkarbonat in Lithiumhydroxid umgewandelt. Die direkte Fällung von Lithiumhydroxid mit Natriumhydroxid aus der Lösung ist auch Stand der Technik.

Neuere Entwicklungen zielen auf die direkte Herstellung von Lithiumhydroxid mittels des Chloralkali-Prozesses ohne vorangehende Herstellung von Lithiumkarbonat ab. So ist z.B. aus der US 2011/0044882 ein Verfahren zur Herstellung von Lithiumhydroxid aus einer Lithiumchloridlösung bekannt. Eine lithiumhaltige Lösung, welche aus Solen oder Erzen gewonnen werden kann, wird zunächst aufkonzentriert und anschließend verschiedenen Reinigungsschritten, wie einer pH-Wert-Anpassung zur Fällung von zwei- oder dreiwertigen Ionen oder einem lonenaustausch zur Reduzierung der Gesamtkonzentration an Calcium und Magnesium unterzogen. Die aufkonzentrierte und gereinigte Lithiumchloridlösung wird einer Elektrolyse zugeführt, wobei eine semipermeable Membran für Lithiumionen durchlässig ist, sodass eine Lithiumhydroxidlösung mit Chlor und Wasserstoff als Nebenprodukten erhalten wird. Chlorgas wird an der Anode der Elektrolysevorrichtung gewonnen und Lithiumhydroxid sowie Wasserstoff an der Kathode. Der Gesamtanteil an Calcium und Magnesium in der hochreinen Lithiumhydroxidlösung beträgt weniger als 150 ppb (Anzahl Teile pro Milliarde).

Zur Herstellung der Lithiumchloridlösung wird in der AU 2013 20 18 33 B2 vorgeschlagen, das im Erz enthaltene Lithium durch eine Auslaugung von β-Spodumen mit Salzsäure zu extrahieren. In einem darauffolgenden Reinigungsschritt wird die erhaltene Lösung gereinigt und aufkonzentriert, um diese anschließend der Elektrolyse zuzuführen. Die Lithium-Gewinnungsrate für die entstehende Lithiumchloridlösung beträgt bei dieser Herstellungsroute nach dem Artikel NOGUEIRA et al., Comparison of Processes for Lithium Recovery from Lepidolite by H2SO4 Digestion or HCl Leaching, Proc. Inter. Con. Min. Mater. and Metal. Eng. 2014) weniger als 84 %. Weiterhin ist in dem Artikel YAN et al., Extraction of lithium from lepidolite using chlorination roasting - water leaching process, Trans. Nonferrous Met. Soc. China 22 (2012), 1753, ein alternatives Verfahren zur Herstellung einer Lithiumchloridlösung bekannt. Gemäß dem beschriebenen Verfahren wird Lepidolith zunächst zerkleinert und zur Chlorierung mit einem Gemisch aus Natriumchlorid und Calciumchlorid versetzt. In der entstehenden Lithiumchloridlösung sind 92 % des Lithiumanteils des Erzes enthalten.

Aus der US 2005/220691 A1 ist ein Verfahren zur Gewinnung von Lithiumchlorid aus einer bei der Chlorierungs-Reaktion entstehenden Gasphase bekannt. Hierzu werden die in der Gasphase enthaltenen, flüchtigen Bestandteile und Verbrennungsgase, wie CO und CO₂, per Vakuum aus dem Reaktor entnommen und einem Kondensator zugeführt. Mit fortschreitender Vakuumierung gelangt auch das verflüchtigte Lithiumchlorid in den Kondensator. Der Kondensator kann bei Raumtemperatur betrieben werden, sodass die gasförmigen Reaktionsprodukte typischerweise zu Feststoffen kondensieren.

Aus anderen Quellen sind Prozesse zur Herstellung von Lithiumchlorid-Lösungen mit höheren Lithium-Gewinnungsraten bekannt. Zum Beispiel zeigt der Artikel BARBOSA et al., Kinetic study on the chlorination of β-spodumene for lithium extraction with Cl2gas, Miner Eng.56 (2014) 29-34 eine mögliche Prozessroute zur Extraktion von Lithium aus lithiumhaltigem Erz auf. Hierbei wird die natürlich vorkommende, alphakristalline Form des im Erz enthaltenen Spodumen zunächst kalziniert, um das Spodumen in seine betakristalline Form zu überführen. Das β-Spodumen wird anschließend mit reinem Chlorgas chloriert, wobei die erhaltene Lithiumchlorid-Lösung 100 % des im Spodumen enthaltenen Lithiums aufweist.

Nachteilig an dem bekannten Stand der Technik sind die hohen Kosten und die teilweise geringe Ausbeute an Lithium bzw. Lithiumhydroxid aus den lithiumhaltigen Erzen und/oder Mineralen und/oder Erden. Insbesondere bei der Fällung von Lithiumkarbonat aus einer Lithiumsulfatlösung werden hohe Mengen an Natriumkarbonat verbraucht. Natriumkarbonat unterliegt jedoch einer stark schwankenden Preisentwicklung am Markt, wodurch ein Verfahren zur Herstellung von Lithiumhydroxid über Lithiumkarbonat als Zwischenprodukt einem erhöhten Kostenrisiko unterworfen ist. In der AU 2013 20 18 33 B2 wird die Herstellung des Zwischenprodukts Lithiumkarbonat umgangen, indem Lithiumhydroxid mittels des Chloralkali-Prozesses aus einer Lithiumchloridlösung gewonnen wird. Die Lithiumchloridlösung wird durch Auslaugung von β-Spodumen mit Salzsäure erhalten. Auch bei dieser Verfahrensroute ist die Ausbeute an Lithium durch die Auslaugung mit Salzsäure vergleichsweise gering. Höhere Lithiumgewinnungsraten könnten durch längere Prozesszeiten und eine Erhöhung der Prozesstemperatur erzielt werden, was jedoch eine geringere Wirtschaftlichkeit der Verfahrensroute nach sich zieht.

Der Erfindung liegt daher die Aufgabe zugrunde, eine Lösung zu schaffen, die es ermöglicht, bei einem Verfahren zur Herstellung von Lithiumhydroxid aus lithiumhaltigem Erz und/oder Mineral und/oder lithiumhaltigen Erden die Gewinnungsrate von hochreinem Lithiumhydroxid bei der Anwendung eines Chloralkali-Prozesses zu erhöhen.

Diese Aufgabe wird erfindungsgemäß durch ein Verfahren gemäß Anspruch 1 gelöst. Bei dem erfindungsgemäßen Verfahren zur Herstellung von Lithiumhydroxid aus lithiumhaltigem Erz und/oder Mineral und/oder lithiumhaltigen Erden, insbesondere zur Herstellung von hochreinem Lithiumhydroxid zur Verwendung in Batterien und/oder Akkumulatoren, wird in einem Chlorierungsschritt Lithiumchlorid hergestellt, wobei die lithiumhaltigen Erze und/oder Minerale und/oder Erden zunächst unter Verwendung von Chlorgas, insbesondere reinem und/oder elementarem Chlorgas, chloriert werden.. Abhängig von der Gestaltung der Chlorierung befindet sich das Lithiumchlorid, nach einer vorteilhaften Ausgestaltung, in dem aus dem Chlorierungsschritt erhaltenen Röstgut oder wird, gemäß einer weiteren vorteilhaften Ausgestaltung, mit einer sich während des Chlorierungsschritts verflüchtigenden Gasphase aus dem Reaktorraum ausgeschleust und getrennt bei einer niedrigeren Temperatur gewonnen. Eine Verdampfung des Lithiumchlorids und/oder eine Überführung des im Spodumen enthaltenen Lithiums in die Gasphase kann bspw. durch eine Chlorierung unter niedrigem Druck erfolgen. In einem nachfolgenden Reinigungsschritt wird dann eine hochreine Lithiumchloridlösung erzeugt, wobei die vorher hergestellte, noch Verunreinigungen enthaltende Lithiumchloridlösung, insbesondere durch Entfernen von Kationen wie Natrium und/oder Kalium und/oder Calcium und/oder Magnesium und/oder Eisen aus der Lithiumchloridlösung gereinigt wird. In einem nachfolgenden, insbesondere abschließenden, Elektrolyseschritt wird dann Lithiumhydroxid hergestellt, wobei die hochreine Lithiumchloridlösung einer Chlorgas und Wasserstoff als Nebenprodukte erzeugenden Membranelektrolyse unterzogen wird.

Erfindungsgemäß wird also eine direkte Herstellung von Lithiumhydroxid aus einem Erz und/oder Mineral und/oder einer Erde ohne die Herstellung von Lithiumkarbonat als Zwischenprodukt bei stark verringertem Einsatz von Chemikalien, insbesondere bei stark verringertem oder sogar ohne den Einsatz von Natriumkarbonat und/oder ohne den Einsatz von Säuren, insbesondere Salzsäure oder Schwefelsäure, gegenüber dem bekannten Stand der Technik vorgeschlagen. Hierzu wird das lithiumhaltige Erz und/oder Mineral und/oder die lithiumhaltige Erde in einem Chlorierungsschritt zunächst unter Verwendung von Chlorgas, vorzugsweise unter Verwendung von reinem und/oder elementarem Chlorgas (CI2) chloriert. Im Vergleich zu anderen Röst- oder Extraktionsverfahren fallen bei der Chlorierung mit Chlorgas keine überschüssigen Chemikalien an. Dies lässt sich darauf zurückführen, dass das zur Chlorierung verwendete, elementare Chlor gasförmig vorliegt und bei ausbleibender Reaktion vom Röstgut getrennt bleibt. Vor der anschließenden Laugung hat sich das Chlorgas bereits verflüchtigt. Durch Chlorieren mit, insbesondere reinem und/oder elementarem, Chlorgas anstelle eines Röstens mit Salzsäure oder Chloriden wird die Gewinnungsrate und/oder die Ausbeute des in der hergestellten Lithiumchloridlösung enthaltenen Lithiums bezogen auf den Lithiumgehalt des Erzes und/oder des Minerals und/oder der Erde verbessert. Mittels der Chlorierung mit reinem, elementarem Chlorgas (Cl₂) ist eine fast vollständige oder vollständige Gewinnung von Lithium aus dem lithiumhaltigen Erz und/oder Mineral und/oder der Erde möglich. Zum Auslaugen des Lithiumchlorids wird, auch im Hinblick auf den späteren Elektrolyseschritt, vorzugsweise Wasser verwendet.

In einem Reinigungsschritt wird aus der hergestellten, noch verunreinigten Lithiumchloridlösung eine hochreine Lithiumchloridlösung gewonnen. Dies bedeutet insbesondere, dass der Anteil des in der Lösung befindlichen Lithiums gegenüber anderen Ionen erhöht wird. Insbesondere werden Kationen, wie bspw. Natrium und/oder Kalium und/oder Calcium und/oder Magnesium und/oder Eisen, aus der Lithiumchloridlösung entfernt. Dies ist ebenfalls im Hinblick auf den nachfolgend durchzuführenden Elektrolyseschritt, bei welchem sich neben dem zu gewinnenden Lithium auch unerwünschte Kationen an der Kathode niederschlagen, vorteilhaft.

Die Erfindung kombiniert somit die Vorteile zweier aus dem Stand der Technik bekannter Verfahren zur Herstellung von Lithiumhydroxid, indem einzelne Verfahrensschritte eines die Gewinnung von Lithiumkarbonat als Zwischenprodukt nutzenden Herstellungsverfahrens in eine Chloralkali-Herstellungsroute übernommen werden und/oder einzelne Schritte der Chloralkali-Herstellungsroute ersetzen und/oder an diese angepasst werden.

In einer vorteilhaften Ausgestaltung zeichnet sich das erfindungsgemäße Verfahren dadurch aus, dass das in dem Elektrolyseschritt erzeugte Chlorgas wahlweise, zumindest teilweise, in dem Chlorierungsschritt zum Chlorieren der lithiumhaltigen Erze und/oder Minerale und/oder Erden verwendet wird. Vorzugsweise entspricht, stöchiometrisch betrachtet, die Menge des in dem Elektrolyseschritt erzeugten Chlorgases der Menge des in dem Chlorierungsschritt zur Chlorierung zugegebenen Chlorgases, sodass das mittels Elektrolyse erzeugte Chlorgas vollständig rückgeführt und derart im Kreis geführt wird, dass eine Zugabe von weiterem und/oder zusätzlichem Chlorgas nicht oder nur in sehr geringem Maße notwendig ist. Ein besonderer Effekt der vorteilhaften Ausgestaltung der Erfindung ist also die Kombination der Chlorgas verbrauchenden Chlorierung des Chlorierungsschritts mit der Chlorgas produzierenden Chlor-Alkalielektrolyse des Elektrolyseschritts. Hierbei wird das in einem vorangehenden Verfahrensschritt, dem Chlorierungsschritt, verwendete Chlorgas in einem darauffolgenden Verfahrensschritt, dem Elektrolyseschritt, vorzugsweise vollständig wieder gewonnen und zur Verwendung in dem vorangehenden Verfahrensschritt, dem Chlorierungsschritt, vorzugsweise vollständig rückgeführt.

Nach einer vorteilhaften Erfindungsausgestaltung wird das, aus dem Chlorierungsschritt erhaltene, lithiumchloridhaltige Röstgut, im Anschluss an den Chlorierungsschritt, mit Wasser zur Herstellung einer Lithiumchloridlösung gelaugt.

Eine vorteilhafte Ausgestaltung der Erfindung sieht vor, dass lithiumchloridhaltige, gasförmige Bestandteile, die sich während des Chlorierungsschritts verflüchtigen, zur Herstellung einer Lithiumchloridlösung, im Anschluss an den Chlorierungsschritt und insbesondere vor einer Laugung, kondensiert werden. Die während der Chlorierung entstehende, gasförmige Phase wird zunächst aus dem Reaktor transportiert und anschließend zur Gewinnung des darin enthaltenen Lithiumchlorids, insbesondere bei Raumtemperatur, kondensiert. Im Anschluss an die Kondensierung wird zur Herstellung der Lösung dann eine Laugung des Kondensats mit Wasser vorgenommen. Je nach Ausgestaltung der Chlorierung sind zur Herstellung der Lithiumchloridlösung folglich zwei alternative Verfahrensschritte, zum einen eine Laugung des Röstguts mittels Wasser und zum anderen eine, eine geringere Wärmeenergiemenge benötigende, Kondensation der flüchtigen Bestandteile mit darauf folgender Laugung vorgesehen.

Die Erfindung zeichnet sich auch dadurch aus, dass das in dem Elektrolyseschritt erzeugte Chlorgas wahlweise, zumindest teilweise, mit dem ebenfalls in dem Elektrolyseschritt erzeugten Wasserstoff, insbesondere mittels eines HCL-Erzeugers, zu Salzsäure rekombiniert wird. Die dadurch erzeugte Salzsäure kann als Nebenprodukt des Lithiumhydroxid-Herstellungsverfahrens entnommen werden. Insgesamt kann das in der Elektrolyse erhaltene Chlorgas also wahlweise, vollständig oder teilweise, zur Chlorierung rückgeführt werden und/oder vollständig oder teilweise zur Erzeugung von Salzsäure mit dem ebenfalls in dem Elektrolyseschritt erzeugten Wasserstoff rekombiniert werden. Sofern der Wasserstoff nicht zur Herstellung von Salzsäure genutzt wird kann dieser für andere Prozesse in bekannter Weise weiterverwendet und/oder beispielsweise zum anschließenden Verkauf oder zur späteren Verwendung gespeichert und/oder gelagert werden.

Im Vergleich zum Sulfatverfahren, bei welchem das lithiumhaltige Erz und/oder Mineral und/oder die lithiumhaltige Erde, insbesondere Lepidolith, geröstet und das erhaltene β-Spodumen mittels Schwefelsäure aufgeschlossen wird, weist die Chlorierung mit Chlorgas, insbesondere mit reinem und/oder elementarem Chlorgas, eine erhöhte, insbesondere 100%ige, Lithium-Ausbeute auf. Die Auslaugung der Lösung erfolgt vorteilhaft mit Wasser, sodass aus der hergestellten Lithiumchloridlösung anschließend mittels des Chloralkali-Prozesses Lithiumhydroxid und wahlweise Wasserstoff (H₂) und Chlorgas (Cl₂) und/oder Salzsäure (HCl) gewonnen werden kann.

Zweckmäßigerweise sollten vor dem Elektrolyseschritt in der Lithiumchloridlösung enthaltene und die Elektrolyse beeinträchtigende Kationen insbesondere Eisen und/oder Calcium und/oder Magnesium auf sehr niedrige Konzentrationen reduziert werden. In vorteilhafter Weiterbildung sieht die Erfindung daher vor, dass die Lithiumchloridlösung in dem Reinigungsschritt durch Einstellen des pH-Werts der Lithiumchloridlösung, insbesondere auf einen pH-Wert größer 8, gereinigt wird, wobei der pH-Wert vorzugsweise durch Zugabe einer, insbesondere Hydroxide und/oder Karbonate enthaltenden, Lauge und/oder alkalischen Lösung erhöht wird. Durch Erhöhung des pH-Wertes, insbesondere auf einen pH-Wert größer 8, können unerwünschte Ionen, wie Aluminium, Eisen, Magnesium und Mangan als entsprechende Hydroxide aus der Lithiumchloridlösung ausgefällt und anschließend abgeschieden werden. Eine weitere Möglichkeit bietet zum Beispiel die Oxidierung von in der Lithiumchloridlösung enthaltenem Eisen, wobei der Lithiumchloridlösung chemische Stoffe, die zur Oxidierung von Eisen geeignet sind zugegeben werden. Zweckmäßigerweise kann aus der Lithiumchloridlösung in dem Reinigungsschritt durch Zugabe von Alkalikarbonat, insbesondere Lithiumkarbonat und/oder Natriumkarbonat, Calcium entfernt werden. Gegebenenfalls kann ein Teil des zur Chlorierung des lithiumhaltigen Erzes und/oder Minerals und/oder der lithiumhaltigen Erde zugegebenen Chlorgases auch zu Calciumchlorid umgesetzt werden, wobei im Erz und/oder im Mineral und/oder in der Erde enthaltene Calcium-Verunreinigungen mit dem Chlorgas zu Calciumchlorid reagieren. Die Erfindung sieht daher in weiterer Ausgestaltung vor, dass die Lithiumchloridlösung in dem Reinigungsschritt durch Zugabe von Alkalikarbonat, insbesondere Lithiumkarbonat und/oder Natriumkarbonat gereinigt wird, wobei insbesondere Calcium aus der Lithiumchloridlösung entfernt wird. Das entstandene Calciumkarbonat lässt sich aus der Lithiumchloridlösung abscheiden, wohingegen das zugegebene Lithium im Elektrolyseschritt wiedergewonnen wird.

Ferner kann die hergestellte Lithiumchloridlösung auch einem lonenaustausch, insbesondere einem Kationenaustausch zur weiteren Verringerung der in der Lithiumchloridlösung enthaltenen Kationen, unterzogen werden. Die Erfindung sieht daher auch vor, dass die Lithiumchloridlösung in dem Reinigungsschritt einem lonenaustausch, insbesondere einem Kationenaustausch, zur weiteren Verringerung der in der Lithiumchloridlösung enthaltenen Kationen unterzogen wird.

Ebenfalls zweckmäßig ist eine optionale Reinigung der Lithiumchloridlösung in dem Reinigungsschritt durch fraktionelle Kristallisation, wobei Lithium und/oder Natrium und/oder Kalium voneinander getrennt werden und das Natrium und/oder Kalium als Natriumchlorid bzw. Kaliumchlorid ausfällt, was die Erfindung in Weiterbildung vorsieht.

Auch durch Lösungsmittel-Extraktion kann die Lithiumchloridlösung weiter aufgereinigt werden. Hierbei wird das zu gewinnende Lithium von anderen Alkalisalzen, insbesondere Natriumchlorid, getrennt. Die Erfindung zeichnet sich daher schließlich auch dadurch aus, dass die Lithiumchloridlösung in dem Reinigungsschritt durch Lösungsmittel-Extraktion gereinigt wird, wobei Lithium von anderen Alkalisalzen, insbesondere Natriumchlorid, getrennt wird.

Weitere, aus dem Stand der Technik bekannte Möglichkeiten zur Reinigung der Lithiumchloridlösung können alternativ oder optional zu den zuvor beschriebenen Reinigungsmöglichkeiten während des Reinigungsschritts des erfindungsgemäßen Herstellungsverfahrens angewendet werden.

Die Erfindung ist nachstehend anhand einer Zeichnung beispielhaft näher erläutert. Diese zeigt in der
- Figur: ein Verfahrensfließbild eines erfindungsgemäßen, beispielhaften Verfahrens zur Herstellung von Lithiumhydroxid aus lithiumhaltigem Erz und/oder Mineral und/oder einer lithiumhaltigen Erde.

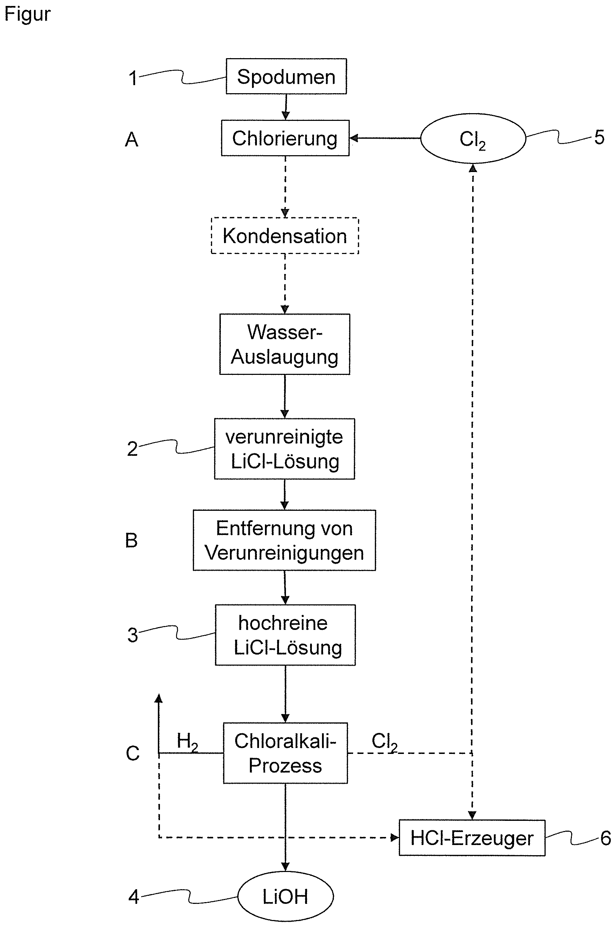

In der Figur ist ein Verfahrensfließbild eines erfindungsgemäßen, beispielhaften Verfahrens zur Herstellung von Lithiumhydroxid aus lithiumhaltigem Erz und/oder Mineral und/oder einer lithiumhaltigen Erde (1) dargestellt. Gemäß dem Ausführungsbeispiel dient das lithiumhaltige Mineral oder Erde (1) Spodumen (LiAl[Si₂O₆]) als Ausgangsprodukt zur Herstellung von Lithiumhydroxid (4), welches als Endprodukt des erfindungsgemäßen Herstellungsverfahrens zur Weiterverwendung für Batterieapplikationen, insbesondere für wiederaufladbare Lithium-Ionen-Batterien, gewonnen wird. Insbesondere kann mittels des erfindungsgemäßen Herstellungsverfahrens hochreines Lithiumhydroxid gewonnen werden, dessen Gesamtgehalt an störenden Fremdkationen, wie Calcium und Magnesium unter 150 ppb (Anzahl Teile pro Milliarde) liegt. Spodumen kommt in lithiumhaltigen Erzen (1), insbesondere in Lepodolith vor. Die Aufbereitung des lithiumhaltigen Erzes und/oder Minerals (1) zur erfindungsgemäßen Weiterverarbeitung kann in üblicher Weise durch Zerstoßen und Mahlen der Gesteinsbrocken erfolgen. Nachfolgend ist die Gesamtreaktion des erfindungsgemäßen Ausführungsbeispiels zur Herstellung von Lithiumhydroxid (4) aus dem lithiumhaltigen Mineral (1) Spodumen dargestellt:

4 LiAlSi₂O₆ + 4 H₂O → 4 LiOH + 2 Al₂Si₄O₁₁ + O₂+ 2H₂

In einem Chlorierungsschritt (A) wird das lithiumhaltige Mineral (1) Spodumen zunächst bei einer Temperatur von 1100°C für 2 Stunden unter Zugabe von Chlorgas (Cl₂) (5) geröstet. Nachfolgend ist die Reaktion von Spodumen mit Chlorgas (5) gezeigt:

LiAlSi₂O₆ + 1/2Cl₂(g) → 1/4O₂(g) + LiCl + 1/2Al₂Si₄O₁₁

Überschüssiges und/oder nicht zu Lithiumchlorid (LiCI) umgesetztes Chlorgas (5) verflüchtigt sich, bevor anschließend die Auslaugung mit Wasser bei einer Temperatur von 90°C erfolgt. Alternativ kann die Chlorierung bei einem niedrigen Druck durchgeführt werden, wodurch das Lithiumchlorid in der gasförmigen Phase enthalten ist. Die gasförmige Phase wird vor der Auslaugung mit Wasser bei Raumtemperatur kondensiert. Gegenüber einer Auslaugung mit Säure, beispielsweise Salzsäure oder Schwefelsäure, ist die Verwendung von Wasser ungefährlicher, kostengünstiger und vorteilhaft für einen später folgenden Chloralkali-Prozess.

Die Ausbeute, d.h. der extrahierte Anteil an Lithium zu der im Ausgangsprodukt insgesamt enthaltenen Menge an Lithium, beträgt im Ausführungsbeispiel 100%. Der Anteil überschüssiger Chemikalien in der noch verunreinigten Lithiumchloridlösung (2) beträgt, aufgrund der vollständigen Umsetzung des im Spodumen enthaltenen Lithiums und der Flüchtigkeit des gegebenenfalls überschüssigen Chlorgases (5) 0%. Gegebenenfalls kann ein Teil des zur Chlorierung des lithiumhaltigen Erzes und/oder Minerals und/oder der lithiumhaltigen Erde (1) zugegebenen Chlorgases (5) auch zu Calciumchlorid umgesetzt werden, wobei darin enthaltene Calcium-Verunreinigungen mit dem Chlorgas (5) zu Calciumchlorid reagieren. Eine Ausscheidungsreaktion für Calciumchlorid durch Zugabe von Natriumkarbonat kann im nachfolgenden Reinigungsschritt (B) durchgeführt werdend und stellt sich wie folgt dar:

CaCl₂ + Na₂CO₃ → CaCO₃ + 2 NaCl

In einem Reinigungsschritt (B) wird die Lithiumchloridlösung (2) weiter aufbereitet bzw. gereinigt um eine hochreine Lithiumchloridlösung (3) zu erhalten. Eine hochreine Lithiumchloridlösung (3) zeichnet sich insbesondere durch einen sehr geringen Anteil an störenden Fremdkationen, wie Natrium, Kalium, Magnesium, Calcium und Eisen aus. Insbesondere liegt der Gesamtanteil an Magnesium und Calcium unter 150 ppb (Anzahl Teile pro Milliarde) bezogen auf die Gesamtionenmenge. Wie zuvor beschrieben, kann die Entfernung der Fremdkationen und sonstige Reinigung mittels Einstellen des pH-Wertes auf einen pH-Wert > 8 der Lithiumchloridlösung (2), durch Hinzufügen von chemischen Stoffen zur Oxidierung von Eisen, mittels Trennung durch fraktionelle Kristallisation, Trennung durch Lösungsmittel-Extraktion und/oder durch lonenaustausch erfolgen.

Die mittels des Reinigungsschritts (B) erhaltene, hochreine Lithiumchloridlösung (3) wird zur Gewinnung von Lithiumhydroxid (4) einem Elektrolyseschritt (C) unterzogen. Mittels einer eine semipermeable Membran aufweisenden Membranelektrolysevorrichtung wird im Elektrolyseschritt (C) ein Chloralkali-Prozess durchgeführt. Eine Anode und eine Kathode der Elektrolysevorrichtung sind durch die semipermeable Membran voneinander getrennt. Durch Anlegen einer Spannung werden die in der hochreinen Lithiumchloridlösung (3) enthaltenen Ionen voneinander getrennt, wobei Lithiumhydroxid (4) als Hauptprodukt und Wasserstoff als Nebenprodukt der Elektrolyse an der Kathode gewonnen werden und Chlorgas (5) als Nebenprodukt an der Anode gewonnen wird. Da bereits im Reinigungsschritt (B) störende Fremdkationen aus der Lithiumchloridlösung (2) entfernt wurden, um eine hochreine Lithiumchloridlösung (3) zu erhalten, kann das sich an der Kathode ansammelnde Lithiumhydroxid (4) ebenfalls hochrein, d.h. nahezu frei von störenden Kationen, entnommen werden.

Die gewonnenen Nebenprodukte, Wasserstoff und Chlorgas (5) können mittels eines HCI-Erzeugers (6) zu Salzsäure rekombiniert werden. Durch die Herstellung eines leicht verkäuflichen Nebenprodukts, wie Salzsäure, kann die Wirtschaftlichkeit des erfindungsgemäßen Verfahrens weiter erhöht werden. Alternativ kann das im Elektrolyseschritt (C) gewonnene Chlorgas (5) teilweise oder vorzugsweise vollständig rückgeführt werden, um im Chlorierungsschritt (A) zur Chlorierung der lithiumhaltigen Minerale und/oder Erze und/oder Erden (1) genutzt zu werden. Auf diese Weise lässt sich der zur Chlorierung notwendige Bedarf an Chlorgas (5) stark absenken bzw. auf null reduzieren, indem das Chlorgas (5) im Kreis geführt wird. Der an der Katode gewonnene Wasserstoff kann dann zur späteren Verwendung gespeichert und/oder gelagert werden oder zur direkten Weiterverwendung einem anderen Prozess zugeführt werden.

Das gewonnene, insbesondere hochreine Lithiumhydroxid, ist zur Verwendung in Batterieapplikationen, insbesondere zum Einsatz in wiederaufladbaren Lithium-Ionen-Batterien oder zur Weiterverarbeitung, bspw. zu Lithiumkarbonat, insbesondere hochreinem Lithiumkarbonat, geeignet.

### Bezugszeichenliste

- 1: lithiumhaltige Erze und/oder Minerale und/oder Erden
- 2: Lithiumchloridlösung
- 3: hochreine Lithiumchloridlösung
- 4: Lithiumhydroxid
- 5: Chlorgas
- 6: HCl-Erzeuger
- A: Chlorierungsschritt
- B: Reinigungsschritt
- C: Elektrolyseschritt

## Patentansprüche

1. Verfahren zur Herstellung von Lithiumhydroxid (4), insbesondere von hochreinem Lithiumhydroxid zur Verwendung in Batterien und/oder Akkumulatoren, aus lithiumhaltigem Erz und/oder Mineral und/oder lithiumhaltigen Erden (1) mittels eines Chloralkali-Prozesses, wobei
- in einem Chlorierungsschritt (A) eine Lithiumchloridlösung (2) hergestellt wird, wobei die lithiumhaltigen Erze und/oder Minerale und/oder Erden (1) zunächst unter Verwendung von Chlorgas (5) chloriert werden,
- wobei in einem nachfolgenden Reinigungsschritt (B) dann eine hochreine Lithiumchloridlösung (3) erzeugt wird, wobei die Lithiumchloridlösung (2), insbesondere durch Entfernen von Kationen, wie Natrium, Kalium, Calcium, Magnesium und/oder Eisen aus der Lithiumchloridlösung (2) gereinigt wird, und
- wobei in einem nachfolgenden Elektrolyseschritt (C) dann Lithiumhydroxid (4), insbesondere hochreines Lithiumhydroxid, hergestellt wird, wobei die hochreine Lithiumchloridlösung (3) einer Chlorgas (5) und Wasserstoff als Nebenprodukte erzeugenden Membranelektrolyse unterzogen wird.

2. Verfahren nach Anspruch 1, **dadurch gekennzeichnet, dass** das in dem Elektrolyseschritt (C) erzeugte Chlorgas (5) zumindest teilweise in dem Chlorierungsschritt (A) zur Chlorierung der lithiumhaltigen Erze und/oder Minerale und/oder Erden (1) verwendet wird.

3. Verfahren nach Anspruch 1 oder 2, **dadurch gekennzeichnet, dass** das aus dem Chlorierungsschritt (A) erhaltene, lithiumchloridhaltige Röstgut im Anschluss an den Chlorierungsschritt (A) mit Wasser zur Herstellung einer Lithiumchloridlösung (2) gelaugt wird.

4. Verfahren nach Anspruch 1 oder 2, **dadurch gekennzeichnet, dass** lithiumchloridhaltige, gasförmige Bestandteile, die sich während des Chlorierungsschritts (A) verflüchtigen, zur Herstellung einer Lithiumchloridlösung (2) im Anschluss an den Chlorierungsschritt (A) kondensiert werden.

5. Verfahren nach einem der vorhergehenden Ansprüche, **dadurch gekennzeichnet, dass** das in dem Elektrolyseschritt (C) erzeugte Chlorgas (5) zumindest teilweise mit dem in dem Elektrolyseschritt (C) erzeugten Wasserstoff, insbesondere mittels eines HCL-Erzeugers (6), zu Salzsäure rekombiniert wird.

6. Verfahren nach einem der vorhergehenden Ansprüche, **dadurch gekennzeichnet, dass** die Lithiumchloridlösung (2) in dem Reinigungsschritt (B) durch Einstellen des pH-Werts, insbesondere auf einen pH-Wert größer 8, gereinigt wird.

7. Verfahren nach Anspruch 6, **dadurch gekennzeichnet, dass** der pH-Wert durch Zugabe einer Hydroxide und/oder Karbonate enthaltenden Lauge und/oder einer alkalischen Lösung erhöht wird.

8. Verfahren nach einem der vorhergehenden Ansprüche, **dadurch gekennzeichnet, dass** die Lithiumchloridlösung (2) in dem Reinigungsschritt (B) durch Zugabe von Alkalikarbonat, insbesondere Lithiumkarbonat und/oder Natriumkarbonat, gereinigt wird, wobei insbesondere Calcium aus der Lithiumchloridlösung (2) entfernt wird.

9. Verfahren nach einem der vorhergehenden Ansprüche, **dadurch gekennzeichnet, dass** die Lithiumchloridlösung (2) in dem Reinigungsschritt (B) einem lonenaustausch, insbesondere einem Kationenaustausch, zur weiteren Verringerung der in der Lithiumchloridlösung (2) enthaltenen Kationen unterzogen wird.

10. Verfahren nach einem der vorhergehenden Ansprüche, **dadurch gekennzeichnet, dass** die Lithiumchloridlösung (2) in dem Reinigungsschritt durch fraktionelle Kristallisation gereinigt wird, wobei Lithium und Natrium und/oder Kalium voneinander getrennt werden und das Natrium und/oder Kalium als Natriumchlorid bzw. Kaliumchlorid ausfällt.

11. Verfahren nach einem der vorhergehenden Ansprüche, **dadurch gekennzeichnet, dass** die Lithiumchloridlösung (2) in dem Reinigungsschritt (B) durch Lösungsmittel-Extraktion gereinigt wird, wobei Lithium von anderen Alkalisalzen, insbesondere Natriumchlorid, getrennt wird.

## Claims

1. Method of producing lithium hydroxide (4), particularly high-purity lithium hydroxide for use in batteries and/or accumulators, from ore and/or mineral containing lithium and/or from earths (1) containing lithium, by means of a chloralkali process, wherein
- a lithium-chloride solution (2) is produced in a chlorination step (A), wherein the ores and/or minerals and/or earths (1) containing lithium are initially chlorinated with use of chlorine gas (5),
- a high-purity lithium-chloride solution (3) is then produced in a succeeding purification step (B) wherein the lithium-chloride solution (2) is purified particularly by removal of cations such as sodium, potassium, calcium, magnesium and/or iron from the lithium-chloride solution (2), and
- lithium hydroxide (4), particularly high-purity lithium hydroxide, is then produced in a succeeding electrolysis step (C), wherein the high-purity lithium-chloride solution (3) is subjected to membrane electrolysis producing a chlorine gas (5) and hydrogen as byproducts.

2. Method according to claim 1, **characterised in that** the chlorine gas (5) produced in the electrolysis step (C) is used at least in part in the chlorination step (A) for chlorination of the ores and/or minerals and/or earths (1) containing lithium.

3. Method according to claim 1 or 2, **characterised in that** the calcination stock, which is obtained from the chlorination step (A) and contains lithium chloride, consecutively to the chlorination step (A) is alkalised with water to produce a lithium-chloride solution (2).

4. Method according to claim 1 or 2, **characterised in that** gaseous constituents, which contain lithium chloride and which volatilise during the chlorination step (A), are condensed consecutively to the chlorination step (A) to produce a lithium-chloride solution (2).

5. Method according to any one of the preceding claims, **characterised in that** the chlorine gas (5) produced in the electrolysis step (C) is recombined, particularly by means of an HCL generator (6), with the hydrogen, which is produced in the electrolysis step (C), to form hydrochloric acid.

6. Method according to any one of the preceding claims, **characterised in that** the lithium-chloride solution (2) is purified in the purification step (B) by setting the pH value, particularly to a pH value greater than 8.

7. Method according to claim 6, **characterised in that** the pH value is increased by addition of a lye containing hydroxide and/or carbonate and/or of an alkaline solution.

8. Method according to any one of the preceding claims, **characterised in that** the lithium-chloride solution (2) is purified in a purification step (B) by addition of alkali carbonate, particularly lithium carbonate and/or sodium carbonate, wherein, in particular, calcium is removed from the lithium-chloride solution (2).

9. Method according to any one of the preceding claims, **characterised in that** the lithium-chloride solution (2) is subjected in the purification step (B) to an ion exchange, particularly a cation exchange, for further reduction of the cations contained in the lithium-chloride solution (2).

10. Method according to any one of the preceding claims, **characterised in that** the lithium-chloride solution (2) is purified in the purification step by fractional crystalisation, wherein lithium and sodium and/or potassium are separated from one another and the sodium and/or potassium precipitates or precipitate as sodium chloride or potassium chloride.

11. Method according to any one of the preceding claims, **characterised in that** the lithium-chloride solution (2) is purified in the purification step (B) by solvent extraction, wherein lithium is separated from other alkali salts, particularly sodium chloride.

## Revendications

1. Procédé pour la production d'hydroxyde de lithium (4) en particulier d'hydroxyde de lithium possédant une pureté élevée pour son utilisation dans des batteries et/ou dans des accumulateurs, à partir d'un minerai et/ou d'une substance minérale contenant du lithium et/ou de terres (1) contenant du lithium au moyen d'un procédé de production de chlore et de soude caustique ; dans lequel
- dans une étape de chloration (A), on prépare une solution de chlorure de lithium (2) ; dans laquelle on soumet d'abord les minerais et/ou les substances minérales et/ou les terres (1) contenant de lithium, à une chloration en utilisant du chlore gazeux (5) ;
- dans lequel, dans une étape de purification ultérieure (B), on produit ensuite une solution de chlorure de lithium (3) possédant une pureté élevée ; dans laquelle on purifie la solution de chlorure de lithium (2), en particulier par l'intermédiaire d'une élimination de cations tels que le sodium, le potassium, le calcium, le magnésium et/ou le fer à partir de la solution de chlorure de lithium (2) ; et
- dans lequel, dans une étape d'électrolyse ultérieure (C), on prépare ensuite de l'hydroxyde de lithium (4), en particulier de l'hydroxyde de lithium possédant une pureté élevée ; dans laquelle on soumet la solution de chlorure de lithium (3) possédant une pureté élevée à une électrolyse à membrane qui permet d'obtenir du chlore gazeux (5) et de l'hydrogène sous la forme de sous-produits.

2. Procédé selon la revendication 1, **caractérisé en ce que** l'on utilise le chlore gazeux (5) que l'on a obtenu au cours de l'étape d'électrolyse (C), au moins en partie, dans l'étape de chloration (A) à des fins de chloration des minerais et/ou des substances minérales et/ou des terres (1) contenant du lithium.

3. Procédé selon la revendication 1 ou 2, **caractérisé en ce que** l'on soumet le produit de grillage contenant du chlorure de lithium, que l'on a obtenu à partir de l'étape de chloration (A), à une lixiviation avec de l'eau, à la suite de l'étape de chloration (A), afin d'obtenir une solution de chlorure de lithium (2).

4. Procédé selon la revendication 1 ou 2, **caractérisé en ce que** l'on soumet les constituants gazeux, contenant du chlorure de lithium, qui se volatilisent au cours de l'étape de chloration (A), à une condensation, à la suite de l'étape de chloration (A), afin d'obtenir une solution de chlorure de lithium (2).

5. Procédé selon l'une quelconque des revendications précédentes, **caractérisé en ce que** l'on soumet le chlore gazeux (5) que l'on a obtenu au cours de l'étape d'électrolyse (C), au moins en partie, à une recombinaison avec l'hydrogène que l'on a obtenu au cours de l'étape d'électrolyse (C), en particulier au moyen d'un agent générant du HCL (6).

6. Procédé selon l'une quelconque des revendications précédentes, **caractérisé en ce que** l'on purifie la solution de chlorure de lithium (2) au cours de l'étape de purification (B) par l'intermédiaire d'un réglage de la valeur du pH, en particulier à une valeur de pH qui est supérieure à 8.

7. Procédé selon la revendication 6, **caractérisé en ce que** l'on élève la valeur du pH par addition d'une lessive contenant des hydroxydes et/ou des carbonates et/ou d'une solution alcaline.

8. Procédé selon l'une quelconque des revendications précédentes, **caractérisé en ce que** l'on purifie la solution de chlorure de lithium (2) au cours de l'étape de purification (B) par addition d'un carbonate de métal alcalin, en particulier de carbonate de lithium et/ou de carbonate de sodium ; dans lequel, en particulier, on élimine le calcium de la solution de chlorure de lithium (2).

9. Procédé selon l'une quelconque des revendications précédentes, **caractérisé en ce que** l'on soumet la solution de chlorure de lithium (2) au cours de l'étape de purification (B) à un échange d'ions, en particulier à un échange de cations, dans le but de réduire davantage la quantité de cations que contient la solution de chlorure de lithium (2).

10. Procédé selon l'une quelconque des revendications précédentes, **caractérisé en ce que** l'on purifie la solution de chlorure de lithium (2) au cours de l'étape de purification par l'intermédiaire d'une cristallisation fractionnée ; dans lequel on sépare les uns des autres le lithium et le sodium et/ou le potassium et on précipite le sodium et/ou le potassium sous la forme de chlorure de sodium, respectivement de chlorure de potassium.

11. Procédé selon l'une quelconque des revendications précédentes, **caractérisé en ce que** l'on purifie la solution de chlorure de lithium (2) au cours de l'étape de purification (B) par extraction dans un solvant ; dans lequel on sépare le lithium des autres sels de métaux alcalins, en particulier du chlorure de sodium.
